# FASCICULE DE BREVET EUROPEEN

(11) **EP 4 486 577 B1**
(45) Date de publication et mention de la délivrance du brevet: **01.10.2025**
(21) Numéro de dépôt: 23706582.6
(22) Date de dépôt: 20.02.2023
(51) Int. Cl.: B60C 9/00, B60C 9/20, B60C 19/12

(54) **ARCHITECTURE OPTIMISÉE D'UN PNEUMATIQUE**
OPTIMIERTE REIFENARCHITEKTUR
OPTIMISED TYRE ARCHITECTURE

(30) Priorité: 28.02.2022 FR 2201725
(43) Date de publication de la demande: 08.01.2025
(73) Titulaire: Compagnie Générale des Etablissements Michelin, 63000 Clermont-Ferrand (FR)
(72) Inventeur: LICENSE, William, 63040 CLERMONT-FERRAND CEDEX 09 (FR); REIX, Olivier, 63040 CLERMONT-FERRAND CEDEX 09 (FR); JOANNET, Eva, 63040 CLERMONT-FERRAND CEDEX 09 (FR); DE KERRET, Lodoic, 63040 CLERMONT-FERRAND CEDEX 09 (FR)
(74) Mandataire: M.F.P. Michelin
(86) Numéro de dépôt international: PCT/EP2023/054203
(87) Numéro de publication internationale: WO 2023/161187

(56) Documents cités:
- EP-A1- 0 598 215
- FR-A1- 2 999 985
- FR-A1- 3 106 530

## Description

La présente invention a pour objet un pneumatique radial, destiné à équiper un véhicule de transport de charge de type camionnette, petit poids-lourd, poids-lourd, génie civil et certains véhicules agricoles. Il concerne plus particulièrement l'armature de sommet d'un tel pneumatique. FR 3 106 530 A1 ou FR 2 999 985 A1 divulgue un pneumatique selon le préambule de la revendication 1.

Les pneumatiques radiaux destinés à équiper de tels véhicules sont désignés au sens de la norme de la European Tyre and Rim Technical Organisation ou ETRTO - Organisation technique européenne du pneu et de la jante. L'invention concerne les pneumatiques dont les indices de charge (ou load index) sont supérieurs à 110 à savoir dont la charge nominale est supérieure à 1050 Kg et qui sont destinés à être montés sur une jante dont le diamètre est au moins égal à 16 pouces.

Un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est particulièrement décrite pour un pneumatique radial de grande dimension destiné à être monté sur un dumper, notamment des véhicules de transport de matériaux extraits de carrières ou de mines de surface, par l'intermédiaire d'une jante dont le diamètre est au moins égal à 35 pouces et peut atteindre 57 pouces, voire 63 pouces et portant des charges nominales supérieures à 20 000 Kg.

Un pneumatique radial pour véhicule poids-lourd, au sens de la norme de la European Tyre and Rim Technical Organisation ou ETRTO, est destiné à être monté sur une jante dont le diamètre est au moins égal à 17.5 pouces et au plus égale à 24 pouces pour un load Index supérieur à 126, c'est-à-dire que leur charge nominale est supérieure à 1650 Kg.

Les pneumatiques radiaux pour camionnettes, concernés par l'invention, ont des load Index supérieurs à 110, c'est-à-dire avec une charge nominale supérieure à 1050 Kg, et sont destinés à être montés sur une jante dont le diamètre est au moins égal à 16 pouces et inférieur à 20 pouces.

Les pneumatiques radiaux pour véhicules agricoles concernés par l'invention ont des load Index supérieurs à 132, c'est-à-dire dont la charge nominale est supérieure à 2000 Kg, et sont destinés à être montés sur une jante dont le diamètre est au moins égal à 18 pouces.

L'expression « les pneumatiques radiaux pour les véhicules concernés par l'invention » désigne l'ensemble des pneumatiques, camionnettes, poids-lourd, de génie civil et véhicules agricoles tels que décrits ci-dessus.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

Généralement le plan circonférentiel médian, dit plan équateur ou plan équatorial, perpendiculaire à l'axe de rotation du pneumatique et passant au centre de la bande de roulement, coupe le pneumatique en deux demi-tores sensiblement symétriques par rapport au dit plan, aux variations de pose près concernant la partie du pneumatique radialement intérieure à la bande de roulement.

De façon générale, un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour les véhicules concernés par l'invention, comprend habituellement au moins une couche de carcasse comprenant des renforts, ou éléments de renforcement, généralement métalliques mais parfois en textile notamment pour les pneumatiques de camionnette, enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts d'une couche de carcasse sont sensiblement parallèles entre eux et forment, avec la direction circonférentielle, un angle compris entre 80° et 100°.

L'armature de sommet d'un pneumatique radial pour les véhicules concernés par l'invention, comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

L'armature de sommet d'un pneumatique radial pour les véhicules concernés par l'invention, comprend au moins deux couches de renforts transverses métalliques, les renforts métalliques desdites couches de renforts transverses formant, avec la direction circonférentielle au niveau du plan équateur, des angles orientés au moins égaux à 10° et au plus égaux à 70°, au moins deux angles de deux couches de renforts transverses étant de signes opposés, les renforts métalliques d'au moins une desdites couches de renforts transverses ayant une résistance à la rupture au moins égale à 80 daN. Ces couches de sommet ont pour objet de reprendre une partie des efforts de gonflage et les efforts transverses, à ce titre elles sont souvent nommées couches de travail. Leurs angles de pose au niveau du plan équateur, sont des angles orientés le plus souvent compris entre égaux à 15° et 45°. Pour un pneumatique radial pour les véhicules concernés par l'invention, la pression de gonflage nominale est supérieure 4 bars voire 5 bars pour les camionnettes et 7 à 9 bars pour les pneumatiques poids-lourd afin de porter la charge. Cette pression implique une force à rupture minimale des renforts métalliques des couches de renforts transverses. Pour les pneumatiques agricoles, les pressions sont plus faibles en usage hors la route mais compte tenu de la charge, les renforts métalliques utilisés ont également une résistance à la rupture au moins égale à 80 daN.

Pour un pneumatique radial pour les véhicules concernés par l'invention, parmi les couches de sommet, on distingue usuellement la ou les couches de protection, constitutives de l'armature de protection et radialement la ou les plus à l'extérieur, et les couches de travail, constitutives de l'armature de travail et radialement comprises entre l'armature de protection et l'armature de carcasse. Les couches de protection ne reprennent en général que très peu d'efforts transverses, soit que leur angle de pose avec la direction circonférentielle soit beaucoup plus proche de 90° que l'angle de pose des couches de travail, soit plus que les renforts des couches de travail soient plus rigides que les renforts de la ou des couches de protection.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent une couche de protection pour les pneumatiques pour camionnettes, pour les poids-lourd, pour les véhicules agricoles concernés par l'invention et souvent deux couches de protection pour les véhicules de génie civil. Les couches de protection sont alors radialement superposées, formées de renforts métalliques extensibles, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection chargée de protéger les autres couches de sommet des agressions externes, déchirures ou autres perforations.

Les deux couches de travail, radialement superposées, sont donc formées de renforts métalliques souvent non extensibles ou moins extensibles que les renforts métalliques de la ou des couches de protection. Les renforts métalliques des couches de travail sont parallèles entre eux dans chaque couche et croisés d'une couche à la suivante, en formant, avec la direction circonférentielle, des angles au plus égaux à 60°, et, de préférence, au moins égaux à 10° et au plus égaux à 45°. Pour une bonne reprise des efforts radiaux et transverses, les concepteurs cherchent à maximiser la force à la rupture des éléments de renforcement des couches de travail.

Pour diminuer les sollicitations mécaniques de gonflage transmises à l'armature de travail, il est connu de disposer, dans l'armature de sommet, une armature de frettage constituée d'une ou de plusieurs couches de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

Dans les applications de type génie Civil, l'armature de frettage peut comprendre deux couches de frettage, radialement superposées, formées de renforts métalliques, parallèles entre eux dans chaque couche et croisés d'une couche à la suivante, en formant, avec la direction circonférentielle, des angles au plus égaux à 10° mais au moins égaux à 5°. Dans ce cas, les éléments de renforcement des couches de frettage sont posés par couches et vont d'un bord axial à l'autre desdites couches de frettage en moins d'une révolution du pneumatique sur son axe de rotation.

Dans les applications de type poids lourd, l'armature de frettage comprend généralement une couche de frettage, formée de renforts métalliques, parallèles entre eux en formant, avec la direction circonférentielle, des angles au plus égaux à 10°.

Une couche de frettage peut être réalisée par l'enroulement circonférentiel d'un fil de frettage ou d'une bande de frettage continue en formant, avec la direction circonférentielle, des angles au plus égaux à 5°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structurel As (en %), l'allongement total à la rupture At (en %), la force à la rupture Fm (charge maximale en N) et la résistance à la rupture Rm (en MPa), ces caractéristiques étant mesurées selon la norme ASTM D 2969-04 de 2014.

L'allongement total à rupture At du renfort métallique est, par définition, la somme de ses allongements structurel, élastique et plastique (At = As + Ae + Ap) et particulièrement à la rupture où chacun des allongements est non nul. L'allongement structurel As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe contrainte-allongement en ce point. En particulier, on appelle module élastique en extension ou module d'Young, le module en extension de la partie linéaire élastique de la courbe contrainte-allongement.

Parmi les renforts métalliques, on distingue usuellement les renforts métalliques extensibles, tels que ceux utilisés dans les couches de protection, et les renforts métalliques non extensibles ou inextensibles, tels que ceux utilisés dans les couches de travail.

Un renfort métallique extensible, dans son état non gommé, est caractérisé par un allongement structurel As au moins égal à 1% et un allongement total à rupture At au moins égal à 3%. En outre, un renfort métallique extensible a un module élastique ou module d'Young en extension au plus égal à 180 GPa, et compris usuellement entre 40 GPa et 150 GPa.

Dans son état gommé extrait d'une matrice polymérique à savoir d'un pneumatique, un renfort métallique extensible est caractérisé par un allongement structurel As au moins égal à 0.5% et un allongement total à rupture At au moins égal à 3%, la matrice polymérique bloquant une partie des mouvements des fils responsables de l'allongement structurel. En outre, un renfort métallique extensible a, dans son état gommé extrait d'une matrice polymérique, un module élastique ou module d'Young en extension au plus égal à 150 GPa, et compris usuellement entre 40 GPa et 120 GPa

Un renfort métallique non extensible est caractérisé par un allongement total At, sous une force de traction égale à 10% de la force à la rupture Fm, au plus égal à 0.2%. Par ailleurs, un renfort métallique non extensible a un module élastique en extension compris usuellement entre 150 GPa et 200 GPa.

Les véhicules concernés par l'invention, outre de porter de la charge et donc d'avoir une certaine pression sont utilisés sur des terrains comprenant des pierres ou d'autres objets plus ou moins tranchants présents sur les sols de roulages, sols en travaux, pistes, routes minières sur lesquelles circulent les dumpers, routes forestières pour les pneumatiques agricoles considérés. Le sommet d'un pneumatique est fréquemment soumis à des coupures susceptibles de le traverser radialement vers l'intérieur et selon la taille de l'objet, de perforer l'ensemble de l'armature de sommet et de carcasse créant une perte de pression et la défaillance du pneumatique. L'utilisation de renforts métalliques extensibles dans les couches de protection est connue pour améliorer la résistance des pneumatiques à la perforation en permettant une meilleure adaptation de ladite couche de protection à la forme de l'obstacle ; néanmoins étant donné le coût des pneumatiques de grande dimension et la fréquence de ces incidents, il est toujours important d'améliorer la performance de la résistance à la perforation.

Les inventeurs se sont donnés pour objectif, pour un pneumatique radial pour véhicules lourds de type camionnette, poids-lourd, génie civil ou agricole, ayant un indice de charge supérieur à 110 ou une charge nominale supérieure 1050 kg, de diminuer le risque de perforation du pneumatique à la suite d'agressions de la bande de roulement lors d'un roulage sur des pierres tranchantes tout en maîtrisant la masse de l'armature de sommet.

Cet objectif a été atteint, selon l'invention, par un pneumatique radial pour véhicules lourds de type camionnette, poids-lourd, génie civil ou agricole, ayant un indice de charge supérieur à 110 ou une charge nominale supérieure 1050 kg comprenant :
- une armature de sommet, radialement extérieure à une armature de carcasse et radialement intérieure à une bande de roulement,
- ladite bande de roulement étant réunie par l'intermédiaire de deux flancs, à deux bourrelets de part et d'autre d'un plan circonférentiel médian, dit plan équateur, perpendiculaire à l'axe de rotation du pneumatique et passant au centre de la bande de roulement,
- l'armature de carcasse s'étendant entre les deux bourrelets,
- l'armature de sommet comprenant au moins deux couches de renforts métalliques transverses, ayant chacune une masse surfacique de métal,
- les renforts métalliques desdites couches de renforts transverses formant, avec la direction circonférentielle au niveau du plan équateur, des angles orientés au moins égaux à 10° et au plus égaux à 70°, au moins deux angles de deux couches de renforts transverses étant de signes opposés, les renforts métalliques d'au moins une desdites couches de renforts transverses ayant une résistance à la rupture au moins égale à 80 daN,
- l'armature de sommet comprenant au moins une couche anti-perforation la plus radialement extérieure, ayant une masse surfacique de métal,
- la au moins une couche anti-perforation étant une cotte de mailles constituée par un assemblage d'anneaux métalliques en alliage ferreux et ayant un diamètre extérieur (d), ladite cotte de mailles étant enrobée dans au moins un matériau polymérique,
- la masse surfacique de métal de la au moins une couche anti-perforation étant au plus égale 70% de la somme des masses surfaciques de métal des couches de renforts transverses.

Pour les pneumatiques, dont les couches de sommet sont en textile, et pour lesquels la masse est une préoccupation majeure, l'invention n'est pas une solution technique intéressante. Pour les pneumatiques dont les indices de charge sont faibles comme les pneumatiques de tourisme, leurs usages sont limités à des routes asphaltées avec une pression nominale et un indice de charge les rendant aptes à absorber les chocs usuels. L'invention n'a dans cet usage que peu d'intérêt pour l'usager.

L'invention consiste en un pneumatique radial ayant un indice de charge supérieur à 110 et dont l'armature de sommet comprend au moins deux couches de renforts transverses métalliques. Ces deux couches de renforts transverses sont habituellement nommées couches de travail lorsque leurs renforts sont inélastiques. Leur fonction est de reprendre les efforts notamment transverses dans les virages et une partie, si ce n'est la totalité, des efforts de pression du pneumatique. Dans cette configuration, les renforts métalliques d'au moins une desdites couches de renforts transverses ont une résistance à la rupture au moins égale à 80 daN.

Si l'armature de sommet comprend une armature de frettage dont les renforts métalliques forment avec l'axe circonférentiel du pneumatique un angle au plus égal à 10°, les renforts des couches transverses reprennent seulement une partie des efforts de pression et de centrifugation.

Les éléments de renforts des couches de renforts transverses peuvent être élastiques ou inélastiques. Ils ont donc un module élastique ou module d'Young en extension au moins égal à 40 GPa. En effet, un pneumatique comprenant uniquement des renforts élastiques, pour peu que les élasticités des renforts soient équilibrées par rapport à leurs différentes fonctions dans le pneumatique, a montré son intérêt dans certaines performances notamment en résistance au choc sommet. Ces pneumatiques selon l'état de l'art comprennent au moins une couche de protection la plus radialement extérieure. Une couche de protection diffère des couches de renforts transverses dans le sens où soit son module élastique est significativement inférieur au module élastique des couches de renforts transverses, soit son allongement structurel As est significativement supérieur à l' allongement structurel As des couches de renforts transverses. Dans ces deux cas, elle ne reprend que très peu d'efforts transverses. Les inventeurs ont constaté avec surprise qu'en remplaçant la ou les couches de protection par une cotte de mailles d'anneaux métalliques enrobée d'au moins un matériau polymérique, à masse équivalente voire à masse réduite comparativement à une ou des couches de protection, améliorait la performance de résistance aux chocs sommet notamment avec des indenteurs à l'extrémité biseautée plus aptes à perforer le pneumatique, et ce bien que l'acier des anneaux de la cotte de mailles ait une résistance à la rupture très inférieure aux aciers à haute résistance des couches de protection et que la couche antiperforation ait, de par sa construction, une résistance à la rupture d'un ordre de grandeur inférieure aux couches de protection.

Pour mesurer la masse surfacique des couches une solution bien connue de l'homme de l'art est de prélever toute ou partie de la couche de renforts métalliques sur un pneumatique. Le prélèvement sera de préférence de forme rectangulaire de la largeur de la couche dans le pneumatique et d'une longueur proche de ladite largeur. Après la mesure la surface dudit prélèvement, les mélanges caoutchouteux du prélèvement sont enlevés par un procédé mécano chimique connu de l'homme de l'art et la masse de métal de l'échantillon est pesée permettant ainsi le calcul de la masse surfacique de la couche de sommet considérée.

Une méthode préférée de fabrication est de déposer de manière régulière, avec ou sans tension, la cotte de mailles sur une première couche de mélange caoutchouteux, ou matériau d'enrobage, et de calandrer celle-ci avec une deuxième couche de mélange caoutchouteux. Les anneaux sont ainsi maintenus en position relative les uns par rapport aux autres dans un agencement circonférentiellement régulier. Cette phase est particulièrement importante, la cotte de mailles ayant une très grande déformabilité. La mesure de l'allongement à rupture selon la norme ASTM E8 d'une telle couche anti-perforation, en traction dans le sens longitudinal, est au moins égale à 120% et, de préférence, au moins égale à 140% dans les versions où la cotte de mailles est posée non tendue, à savoir avec un faible pas. Cette valeur est à comparer avec des allongements au plus égaux à 10% pour les couches de protection des produits existants. Cette caractéristique semble plus apte à expliquer la performance car les couches anti-perforation testées ont une résistance à la rupture nettement plus faible que lesdites couches de protection usuelles. Par ailleurs cette grande déformabilité est un des intérêts majeurs de la cotte de maille, car étant très souple, elle n'offre aucune résistance aux déformations en flexion et en compression provoquées par l'écrasement du pneumatique sous sa charge ou par le roulage. De ce fait une couche anti-perforation peut sans problème être positionnée à une certaine distance de la fibre neutre de l'armature de sommet. La souplesse des couches antiperforation leur permet de supporter sans endommagement les cycles de traction - compression à une distance de la fibre neutre de l'armature de sommet où des couches de renforts métalliques transverses, des couches de frettage ou des couches de protection rompraient rapidement en fatigue.

Par ailleurs l'impact sur la résistance au roulement du pneumatique d'une telle couche est de l'ordre de grandeur de la contribution de son volume en mélange caoutchouteux. Son utilisation n'est donc pas pénalisante sur cette performance en remplacement d'une ou deux couches de protection.

De manière préférée la au moins une couche anti-perforation est une cotte de mailles dont l'assemblage est dit de 4 anneaux en 1 anneau selon l'expression de l'homme de l'art. Ceci signifie qu'à l'exception des anneaux situés aux extrémités notamment axiales de la couche anti-perforation, qu'en tout anneau passent 4 anneaux. Plus précisément une cotte de mailles est constituée par un assemblage d'anneaux dans lequel chaque anneau, à l'exception des anneaux positionnés aux extrémités transversales de la couche anti-perforation, est entrelacé avec quatre autres anneaux, de façon à constituer un maillage de rangées d'anneaux respectivement longitudinales et transversales. Il existe des assemblages de 6 anneaux en 1 anneau ou de 8 anneaux en 2 anneaux, cependant ces agencements ne sont pas optimaux en termes d'épaisseurs de chaque couche anti-perforation.

La cotte de mailles créant un maillage de rangées d'anneaux respectivement longitudinales et transversales, il est possible de mesurer un pas longitudinal et un pas transversal, le pas étant la distance entre deux anneaux consécutifs sur une même rangée longitudinale, respectivement transversale. Une solution préférée est que le pas longitudinal, respectivement le pas transversal de la au moins une couche anti-perforation soit compris entre 0.5 et 0.7 fois le diamètre extérieur des anneaux. Ainsi posée la couche anti-perforation a une plus grande efficacité qu'une cotte de mailles posée tendue. Il semble que de manière étonnante pour bien résister à perforation, il ne convient pas d'opposer immédiatement une certaine rigidité à l'indenteur mais de se déformer d'abord puis d'amener de la rigidité. Le pas de pose longitudinal ou transversal se mesure sur un tissu prélevé du pneumatique. Quand les anneaux de la cotte de mailles sont disposés de manière régulière les anneaux sont disposés selon des lignes transversales et longitudinales. En enlevant les mélanges caoutchouteux radialement extérieurs à la couche anti-perforation, pour chaque anneau, hormis les anneaux situés sur le bord de la couche antiperforation, il y a des anneaux longitudinalement, respectivement transversalement, adjacents dont le centre est situé sur le même axe longitudinalement, respectivement transversalement, aux erreurs de positionnement près à savoir à plus ou moins 25% du diamètre extérieur des anneaux. Le pas longitudinal, respectivement transversal, est la distance longitudinale, respectivement transversale, entre les deux centres de ces deux anneaux longitudinalement, respectivement transversalement, adjacents. Cette pratique de mesure est connue de l'homme du métier pour faire les mesures sur les différentes couches de renforts métalliques perpendiculairement aux câbles.

La mesure des épaisseurs radiales du mélange caoutchouteux et de la couche antiperforation se fait sur une coupe méridienne du pneumatique, obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé. Les mesures se feront sur plusieurs coupes méridiennes réparties tout autour du pneumatique et seront traitées statistiquement pour l'évaluation d'une valeur moyenne sur la circonférence du pneumatique. Les mesures se font de bord à bord de renforts métalliques. Ainsi l'épaisseur radiale du mélange caoutchouteux se fait depuis le bord le plus radialement extérieur d'un câble de la couche de renforts métalliques radialement adjacente à la couche antiperforation au bord le plus radialement intérieur des anneaux de la couche antiperforation. L'épaisseur radiale de la couche antiperforation se fait entre les deux bords, le plus radialement intérieur et le plus radialement extérieur des anneaux de la couche antiperforation.

Une solution avantageuse est que les anneaux de la au moins une couche anti-perforation est un acier dont le taux de carbone est inférieur à 0.2% en pourcentage massique. Cela améliore considérablement la possibilité de souder les deux extrémités des anneaux entre elles afin d'obtenir une cotte de mailles selon l'invention.

De même, pour faciliter la soudure des extrémités de chaque anneau entre elles afin d'avoir des anneaux fermés sur eux-mêmes, une solution avantageuse est que les anneaux de la au moins une couche anti-perforation soient en un acier dont le taux de chrome est supérieur à 10.5% en pourcentage massique. Les mélanges d'enrobage doivent adhérer à la cotte de mailles car, dans le cas contraire, sous les efforts transverses, une fissure dans la largeur de la cotte de mailles se créerait rapidement amenant à une séparation d'une partie de la bande de roulement et du reste du pneumatique. Les anneaux de la cotte de mailles sont donc traités chimiquement afin de permettre l'adhésion du mélange caoutchouteux aux anneaux de la cotte de maille, ce qui est un procédé connu de l'homme de l'art.

L'expérience montre que, pour une même masse de métal, il est plus intéressant d'avoir une seule couche anti-perforation avec un pas plus petit que deux couches de sommet anti-perforation avec un pas plus grand. Pour gagner en masse, il est donc plus intéressant que l'armature de sommet comprenne une unique couche antiperforation.

Une solution préférée est que la couche anti-perforation soit séparée de la couche de sommet de renforts métalliques la plus proche par une épaisseur radiale de mélange caoutchouteux au moins égale, au niveau du plan équateur, à 0.5 fois, et de préférence, au moins une fois, l'épaisseur radiale de la couche anti-perforation. L'expérience a montré que le découplage de la couche anti-perforation et de la couche de sommet de renforts métalliques la plus proche avait un effet très bénéfique sur la résistance aux chocs avec un indenteur biseauté. Cette position est tout à fait acceptable pour une couche anti-perforation compte tenu de sa souplesse en compression et en traction. Une couche de protection constituée de câbles et de mélanges caoutchouteux romprait en compression en se trouvant ainsi éloignée de la fibre neutre de l'armature de sommet. La couche de sommet de renforts métalliques la plus proche peut être une couche de renforts transverses ou une couche de frettage selon les cas.

Les caractéristiques de l'invention sont illustrées par les figures 1 à 4 schématiques et non représentées à l'échelle, en référence à un pneumatique de type génie civil :
- figure 1 : coupe méridienne d'un sommet de pneumatique selon l'invention comprenant deux couches de renforts transverses, deux couches de frettage et une couche anti-perforation découplée des autres couches de sommet.
- figure 2 : coupe méridienne d'un sommet de pneumatique selon l'état de l'art comprenant deux couches de renforts transverses, deux couches de frettage et deux couches de protection.
- figure 3 : une représentation d'un motif d'une cotte de mailles dont l'assemblage est de 4 anneaux en 1 anneau avec un pas de pose maximal.
- Figure 4 : une représentation d'un motif d'une cotte de mailles dont l'assemblage est de 4 anneaux en 1 anneau avec un pas de pose minimal.

Les figures ne représentent pas dans leur totalité les possibilités offertes par l'invention comme, une version de l'invention comprenant deux couches anti-perforation ou pas de couches de frettage. Il existe de nombreuses variantes possibles de positionnement des différentes couches comprises dans l'invention qui ne sont pas représentées.

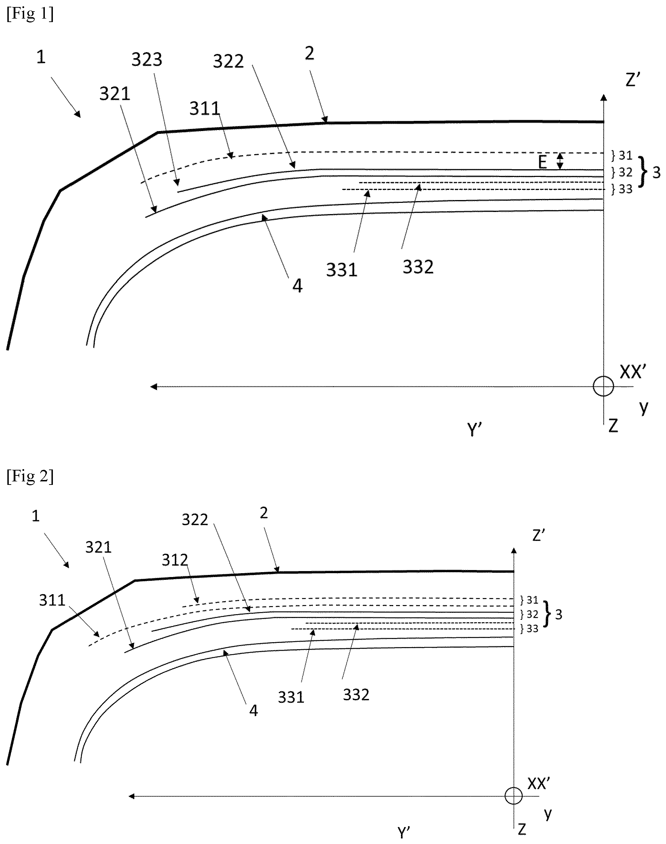

Sur la figure 1 est représentée une coupe méridienne d'un pneumatique 1 pour véhicule lourd de type génie civil selon l'invention comprenant une armature de sommet 3, radialement intérieure à une bande de roulement 2 et radialement extérieure à une armature de carcasse 4. L'armature de sommet 3 comprend des couches de renforts transverses, plus particulièrement des couches de travail (321, 322), comprenant des renforts métalliques inextensibles enrobés dans un matériau élastomérique, parallèles entre eux et formant un angle compris entre 10° et 45°, avec une direction circonférentielle XX' tangente à la circonférence du pneumatique, les renforts métalliques des deux couches de travail 321 et 322 étant croisés d'une couche à la suivante. L'armature de sommet comprend également deux couches de frettage (331, 332) dont les renforts métalliques extensibles enrobés dans un matériau élastomérique, parallèles entre eux, forment, avec la direction circonférentielle XX', un angle au plus égal à 8°. La couche la plus radialement extérieure 311 est une couche anti-perforation constituée d'une cotte de mailles de 4 anneaux en 1, c'est-à-dire qu'excepté pour les anneaux sur les extrémités axiales de la cotte de maille, 4 anneaux passent dans 1 anneau. La couche anti-perforation est distante d'une épaisseur radiale (E) de mélange caoutchouteux de la couche de travail la plus proche.

Sur la figure 2 est représentée une coupe méridienne d'un pneumatique 1 pour véhicule lourd de type génie civil selon l'état de l'art comprenant une armature de sommet 3, radialement intérieure à une bande de roulement 2 et radialement extérieure à une armature de carcasse 4. L'armature de sommet 3 comprend des couches de renforts transverses, plus particulièrement des couches de travail (321, 322), comprenant des renforts métalliques inextensibles enrobés dans un matériau élastomérique, parallèles entre eux et formant un angle compris entre 10° et 45°, avec une direction circonférentielle XX' tangente à la circonférence du pneumatique, les renforts métalliques des deux couches de travail 321 et 322 étant croisés d'une couche à la suivante. L'armature de sommet comprend également deux couches de frettage (331, 332) dont les renforts métalliques extensibles enrobés dans un matériau élastomérique, parallèles entre eux, forment, avec la direction circonférentielle XX', un angle au plus égal à 5°. L'armature de sommet comprend également deux couches de protection 311 et 312 comprenant des renforts métalliques extensibles enrobés dans un matériau élastomérique, parallèles entre eux et formant un angle compris entre 10° et 45°.

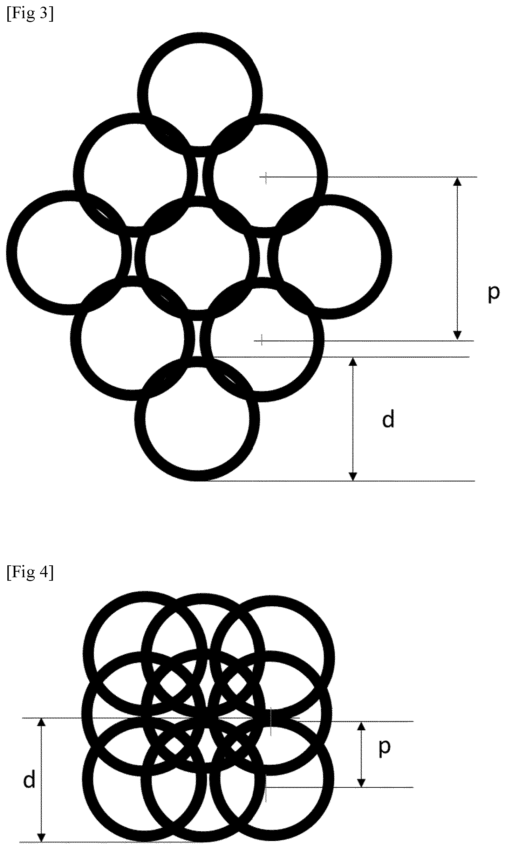

La figure 3 est une représentation d'un motif d'une cotte de mailles dont l'assemblage est de 4 anneaux en 1 anneau avec un pas de pose maximal p et un diamètre extérieur d'anneau d. La cotte de mailles ainsi positionnée et enrobée d'un matériau élastomérique d'enrobage, a l'allongement à rupture le plus faible.

La figure 4 est une représentation d'un motif d'une cotte de mailles dont l'assemblage est de 4 anneaux en 1 anneau avec un pas de pose minimal p et un diamètre extérieur d'anneau d. La couche antiperforation avec un tel pas, a l'allongement à rupture le plus important comparativement à des solutions avec un pas plus grand. La couche formée par la cotte de mailles et le mélange caoutchouteux devant, avant rupture, être déformée de manière à tendre la cotte de mailles afin que la rigidité sollicitée soit celle des anneaux métalliques et non plus des mélanges caoutchouteux.

L'invention a été testée sur des pneumatiques poids-lourd de dimension 15.5R20 dont la charge nominale est de 7800 Kg. Les pneumatiques selon l'invention sont comparés à des pneumatiques de référence de même dimension pour chacun des tests. Les mélanges caoutchouteux des pneumatiques respectivement selon l'invention et de référence, et les sculptures de bande de roulement correspondantes sont identiques. Les armatures de carcasse, les couches de frettage et les couches de travail sont également identiques entre les pneumatiques selon l'invention et les pneumatiques de référence. Les renforts des couches de frettage, de couches de travail, et d'armature de carcasse sont tous des renforts métalliques. Les renforts des couches de travail, ou des couches de renforts transverses inélastiques, ont une résistance à la rupture de 287 daN ; ils forment, avec la direction circonférentielle, un angle moyen égal à 24° opposé d'une couche à l'autre. Les pneumatiques de référence ont deux couches de protection comprenant des renforts en acier haute résistance constitués de câbles élastiques 18.23, à savoir constitués de 18 fils d'acier de 23 centièmes de millimètre, avec un pas de pose de 3mm. Leur allongement structurel As est égal, dans leur état gommé extrait d'une matrice polymérique, à 0.6%, leur allongement total à rupture At est égal à 3.9%, leur module d'Young est égal à de 75 GPa, et leur résistance à la rupture est de 154 daN. Ils forment un angle de 24° avec la direction circonférentielle et sont croisés d'une couche à l'autre.

Les couches anti-perforation testées sont des couches constituées d'une cotte de mailles dont l'assemblage est de 4 anneaux en 1 anneau en acier inoxydable 302, chaque anneau étant constitué par un fil unitaire de 0.7mm de diamètre, formé selon un cercle, ses deux extrémités étant soudées l'une avec l'autre. Les anneaux ont un diamètre extérieur (d) égal à 7 mm. L' acier inoxydable 302 comprend au plus 0.05% de carbone et 16 à 18% de chrome en pourcentage massique. Les anneaux sont traités chimiquement afin de permettre l'adhésion du mélange caoutchouteux d'enrobage aux anneaux. La somme des masses surfaciques de métal des couches de travail est de 8.8 Kg/m² et la masse surfacique maximale testée pour une couche anti-perforation est égale à 4.27 Kg/m², soit inférieure à 50% à la somme des masses surfaciques de métal des couches de travail.

Les anneaux des cottes de mailles testées ici sont fabriqués à partir de fils d'acier de section circulaire mais l'invention fonctionne également avec des fils à section carrée, rectangulaire voire quelconque.

L'invention a été testée sous 4 formes, dont 3 versions avec une seule couche anti-perforation pour remplacer les deux couches de protection :
- Une version A, où la couche anti-perforation est non découplée de l'armature de sommet et les anneaux sont posés selon un pas de 7 mm pour une masse totale de la couche anti-perforation égale à 50% de la masse des couches de protection des pneumatiques de référence. L'allongement à rupture de cette couche de perforation est égal à 148.5%.
- Une version B, où la couche anti-perforation est non découplée de l'armature de sommet et les anneaux sont posés selon un pas de 3.9 mm pour une masse totale de la couche anti-perforation égale à 100% de la masse des couches de protection des pneumatiques de référence. L'allongement à rupture de cette couche de perforation est égal à 228.5%.
- Une version C où la couche anti-perforation est découplée de l'armature de sommet par une couche de mélange caoutchouteux de 5 mm d'épaisseur radiale et les anneaux sont posés selon un pas de 7 mm pour une masse totale de la couche anti-perforation égale à 50% de la masse des couches de protection des pneumatiques de référence. La couche anti-perforation a une épaisseur radiale égale à 2.9 mm. L'allongement à rupture de chaque couche de perforation est égal à 148.5%.

La dernière version D comprend deux couches anti-perforation non découplées de l'armature de sommet, radialement adjacentes, dont les anneaux sont posés selon un pas de 7 mm pour une masse totale des couches anti-perforation égale à 100% de la masse des couches de protection des pneumatiques de référence. L'allongement à rupture de chaque couche de perforation est égal à 148.5%.

La performance de la résistance du sommet à la perforation est mesurée par deux tests quasi statiques effectués en utilisant deux indenteurs ayant des extrémités différentes représentant deux usages différents selon le type d'obstacles rencontrés, perforant non coupant et perforant coupant :
- un indenteur cylindrique de 300 mm de long, à base circulaire de diamètre 76,6 mm dont l'extrémité, destinée à venir au contact du pneumatique, est sphérique.
- un indenteur cylindrique de 300 mm de long, à base circulaire de diamètre 76,6 mm dont l'extrémité, destinée à venir au contact du pneumatique, est biseautée par des plans, symétriques par rapport à l'axe du cylindre, la pointe du biseau ayant un angle de 46°.

Les tests en quasi statique enfoncent l'indenteur à une vitesse de 50 mm/min sur le pneumatique gonflé à la pression recommandée, à savoir 7 bars. L'indenteur est enfoncé au centre de la bande de roulement. Le résultat mesuré du test est la distance de pénétration nécessaire à la rupture de l'armature de sommet. Les résultats sont donnés en base 100, 100 étant le résultat du pneumatique de référence. Un résultat supérieur à 100 indique une meilleure performance que celle de la référence.

Concernant l'équilibre des performances respectivement de la masse (200% de la performance masse signifie une division par 2 de la masse de la couche anti-perforation par rapport à la masse des couches de protection du pneumatiques de référence), de la résistance à la pénétration de l'indenteur à l'extrémité sphérique, et de la résistance à la pénétration de l'indenteur à l'extrémité biseautée comparativement au témoin, les tests ont donné :
- variante A de l'invention : 200. 95, 108
- variante B de l'invention :100, 137, 113
- variante C de l'invention :200, 104, 123
- variante D de l'invention :100, 135, 118

Chacune des lettres testées offre un intérêt évident :
- La masse pour la variante A de l'invention, avec un gain de masse de 100% vis-à-vis du témoin pour des variations peu significatives pour les résistances à la perforation pour les deux types d'indenteurs. Ce qui pour un pneumatique de génie civil peut représenter un dizaine de kilogrammes de métal.
- Améliorations des résistances à la pénétration des deux types d'indenteurs pour les variantes B et D de l'invention.
- la masse et la résistance à la pénétration de l'indenteur biseauté pour la variante C de l'invention.

Sur la base de tels résultats, en choisissant un pas de pose adapté de la cotte de mailles entre les extrêmes testés, il est tout à fait envisageable de trouver une solution avec un gain de masse métal important compris entre 120 et 200% et des gains sur la pénétration des indenteurs compris entre 20 et 30%.

Il est notable que les résultats sont donnés pour des cottes de mailles dont les anneaux sont dans un acier courant offrant une résistance à la rupture faible. La résistance à la rupture d'une couche anti-perforation est de l'ordre de 10% de la résistance d'une couche de protection du pneumatique de référence. Ceci augmente l'intérêt de l'invention dans la mesure où ce type d'acier permet un usage de près de 100% d'acier recyclé quand les aciers haute résistance du témoin ne permettent que d'utiliser un taux d'acier recyclé proche de 70%. Inversement en augmentant la qualité de l'acier des anneaux de la cotte de maille, les performances en résistance à la perforation en seront augmentées. Ceci démontre tout l'intérêt de l'invention.

## Revendications

1. Pneumatique radial (1) pour véhicules lourds de type camionnette, poids-lourd, génie civil ou agricole, ayant un indice de charge supérieur à 110 ou une charge nominale supérieure 1050 kg comprenant :
• une armature de sommet (3), radialement extérieure à une armature de carcasse (4) et radialement intérieure à une bande de roulement (2),
• ladite bande de roulement (2) étant réunie par l'intermédiaire de deux flancs, à deux bourrelets de part et d'autre d'un plan circonférentiel médian, dit plan équateur, perpendiculaire à l'axe de rotation du pneumatique (1) et passant au centre de la bande de roulement (2),
• l'armature de carcasse (4) s'étendant entre les deux bourrelets,
• l'armature de sommet (3) comprenant au moins deux couches de renforts métalliques transverses (321, 322), ayant chacune une masse surfacique de métal,
• les renforts métalliques desdites couches de renforts transverses formant, avec la direction circonférentielle au niveau du plan équateur, des angles orientés au moins égaux à 10° et au plus égaux à 70°, au moins deux angles de deux couches de renforts transverses étant de signes opposés, les renforts métalliques d'au moins une desdites couches de renforts transverses (321, 322) ayant une résistance à la rupture au moins égale à 80 daN,
• l'armature de sommet (3) comprenant au moins une couche anti-perforation (311) la plus radialement extérieure, ayant une masse surfacique de métal,
• **caractérisé en ce que** la au moins une couche anti-perforation (311) est une cotte de mailles constituée par un assemblage d'anneaux métalliques en alliage ferreux et ayant un diamètre extérieur (d), ladite cotte de mailles étant enrobée dans au moins un matériau polymérique,
• et **en ce que** la masse surfacique de métal de la au moins une couche anti-perforation (311) est au plus égale 70% de la somme des masses surfaciques de métal des couches de renforts transverses (321, 322).

2. Pneumatique selon la revendication 1 dans lequel la au moins une couche anti-perforation (311) est une cotte de mailles dont l'assemblage est dit de 4 anneaux en 1 anneau.

3. Pneumatique selon l'une des revendications précédentes dans lequel le pas (p) longitudinal, respectivement transversal, de la au moins une couche anti-perforation (311) est compris entre 0.5 et 0.7 fois le diamètre extérieur (d) des anneaux.

4. Pneumatique selon l'une des revendications précédentes dans lequel les anneaux de la au moins une couche anti-perforation (311) sont en un acier dont le taux de carbone est inférieur à 0.2% en pourcentage massique.

5. Pneumatique selon l'une des revendications précédentes dans lequel les anneaux de la au moins une couche anti-perforation (311) sont en un acier dont le taux de chrome est supérieur à 10.5% en pourcentage massique.

6. Pneumatique selon l'une des revendications précédentes dans lequel l'armature de sommet (3) comprend une unique couche anti-perforation (311).

7. Pneumatique selon la revendication 6 dans lequel la couche anti-perforation (311) est séparée de la couche de sommet de renforts métalliques la plus proche par une épaisseur radiale (E) de mélange caoutchouteux au moins égale, au niveau du plan équateur, à 0.5 fois, de préférence au moins une fois, l'épaisseur radiale de la couche anti-perforation (311).

8. Pneumatique selon une des revendications précédentes dans lequel l'allongement à rupture en traction longitudinale de la couche anti-perforation (311), mesuré selon la norme ASTM E8, est au moins égale à 120%, de préférence 140%.

## Patentansprüche

1. Radialreifen (1) für Schwerlastfahrzeuge vom Typ Lieferwagen, Lastkraftwagen, Baufahrzeug oder landwirtschaftliches Fahrzeug mit einem Tragfähigkeitsindex, der größer als 110 ist, oder einer Nennlast, die größer als 1050 kg ist, umfassend:
• eine Scheitelbewehrung (3) radial außerhalb einer Karkassenbewehrung (4) und radial innerhalb eines Laufstreifens (2),
• wobei der Laufstreifen (2) über zwei Seitenwände mit zwei Wülsten beiderseits einer mittleren Umfangsebene verbunden ist, Äquatorialebene genannt, die senkrecht zur Drehachse des Reifens (1) ist und durch die Mitte des Laufstreifens (2) verläuft,
• wobei sich die Karkassenbewehrung (4) zwischen den zwei Wülsten erstreckt,
• wobei die Scheitelbewehrung (3) mindestens zwei Schichten von quer verlaufenden metallischen Festigkeitsträgern (321, 322) umfasst, die jeweils eine flächenbezogene Masse von Metall aufweisen,
• wobei die metallischen Festigkeitsträger der Schichten von quer verlaufenden Festigkeitsträgern mit der Umfangsrichtung an der Äquatorialebene gerichtete Winkel bilden, die mindestens 10° und höchstens 70° betragen, wobei mindestens zwei Winkel von zwei Schichten von quer verlaufenden Festigkeitsträgern entgegengesetzte Vorzeichen aufweisen, wobei die metallischen Festigkeitsträger wenigstens einer der Schichten von quer verlaufenden Festigkeitsträgern (321, 322) eine Bruchfestigkeit aufweisen, die mindestens 80 daN beträgt,
• wobei die Scheitelbewehrung (3) mindestens eine Perforationsschutzschicht (311) umfasst, welche die radial äußerste ist und eine flächenbezogene Masse von Metall aufweist,
• **dadurch gekennzeichnet, dass** die mindestens eine Perforationsschutzschicht (311) ein Ringgeflecht ist, das aus einer Zusammenfügung von metallischen Ringen aus Eisenlegierung besteht und einen Außendurchmesser (d) aufweist, wobei das Ringgeflecht in mindestens ein Polymermaterial eingebettet ist,
• und dadurch, dass die flächenbezogene Masse von Metall der mindestens einen Perforationsschutzschicht (311) höchstens 70 % der Summe der flächenbezogenen Massen von Metall der Schichten von quer verlaufenden Festigkeitsträgern (321, 322) beträgt.

2. Reifen nach Anspruch 1, wobei die mindestens eine Perforationsschutzschicht (311) ein Ringgeflecht ist, dessen Aufbau als Geflecht von 4 Ringen in 1 Ring bezeichnet wird.

3. Reifen nach einem der vorhergehenden Ansprüche, wobei die Schrittweite (p) in Längs- bzw. Querrichtung der mindestens einen Perforationsschutzschicht (311) zwischen dem 0,5- und dem 0,7-Fachen des Außendurchmessers (d) liegt.

4. Reifen nach einem der vorhergehenden Ansprüche, wobei die Ringe der mindestens einen Perforationsschutzschicht (311) aus einem Stahl bestehen, dessen Kohlenstoffgehalt in Massenprozent kleiner als 0,2 % ist.

5. Reifen nach einem der vorhergehenden Ansprüche, wobei die Ringe der mindestens einen Perforationsschutzschicht (311) aus einem Stahl bestehen, dessen Chromgehalt in Massenprozent größer als 10,5 % ist.

6. Reifen nach einem der vorhergehenden Ansprüche, wobei die Scheitelbewehrung (3) eine einzige Perforationsschutzschicht (311) umfasst.

7. Reifen nach Anspruch 6, wobei die Perforationsschutzschicht (311) von der nächsten Scheitelschicht von metallischen Festigkeitsträgern durch eine radiale Dicke (E) von Kautschukmischung getrennt ist, die an der Äquatorialebene mindestens das 0,5-Fache, vorzugsweise mindestens das 1-Fache, der radialen Dicke der Perforationsschutzschicht (311) beträgt.

8. Reifen nach einem der vorhergehenden Ansprüche, wobei die Bruchdehnung bei Längszugbeanspruchung der Perforationsschutzschicht (311), gemessen nach der Norm ASTM E8, mindestens 120 %, vorzugsweise 140 % beträgt.

## Claims

1. A radial tire (1) for heavy vehicles of the van, heavy-duty, construction plant or agricultural type, having a load index greater than 110 or nominal load greater than 1050 kg, comprising:
• a crown reinforcement (3), radially on the outside of a carcass reinforcement (4) and radially on the inside of a tread (2),
• said tread (2) being connected, via two sidewalls, to two beads on either side of a median circumferential plane, called equator plane, perpendicular to the axis of rotation of the tire (1) and passing through the center of the tread (2),
• the carcass reinforcement (4) extending between the two beads,
• the crown reinforcement (3) comprising at least two layers of transverse metal reinforcers (321, 322), each having a surface density of metal,
• the metal reinforcers of said layers of transverse reinforcers forming, with the circumferential direction at the equator plane, oriented angles at least equal to 10° and at most equal to 70°, at least two angles of two layers of transverse reinforcers being of opposite signs, the metal reinforcers of at least one of said layers of transverse reinforcers (321, 322) having a breaking strength at least equal to 80 daN,
• the crown reinforcement (3) comprising at least one radially outermost anti-puncture layer (311), having a surface density of metal,
• **characterized in that** the at least one anti-puncture layer (311) is chainmail constituted by an assembly of metal rings made of ferrous alloy and having an outer diameter (d), said chainmail being coated in at least one polymeric material,
• and **in that** the surface density of metal of the at least one anti-puncture layer (311) is at most equal to 70% of the sum of the surface densities of metal of the layers of transverse reinforcers (321, 322).

2. The tire as claimed in claim 1, in which the at least one anti-puncture layer (311) is chainmail of which the assembly is referred to as 4 rings in 1 ring.

3. The tire as claimed in either of the preceding claims, in which the longitudinal, respectively transverse, pitch (p) of the at least one anti-puncture layer (311) is between 0.5 and 0.7 times the outer diameter (d) of the rings.

4. The tire as claimed in one of the preceding claims, in which the rings of the at least one anti-puncture layer (311) are made of a steel of which the carbon content is less than 0.2% as a percentage by weight.

5. The tire as claimed in one of the preceding claims, in which the rings of the at least one anti-puncture layer (311) are made of a steel of which the chromium content is greater than 10.5% as a percentage by weight.

6. The tire as claimed in one of the preceding claims, in which the crown reinforcement (3) comprises a single anti-puncture layer (311).

7. The tire as claimed in claim 6, in which the anti-puncture layer (311) is separated from the closest crown layer of metal reinforcers by a radial thickness (E) of rubber compound that is at least equal, at the equator plane, to 0.5 times, preferably at least once, the radial thickness of the anti-puncture layer (311).

8. The tire as claimed in one of the preceding claims, in which the elongation at break under longitudinal tension of the anti-puncture layer (311), measured according to standard ASTM E8, is at least equal to 120%, preferably 140%.
